Europäisches Patentamt

European Patent Office

Office européen des brevets

(11) Veröffentlichungsnummer : **0 170 730**
**B1**

(12) # EUROPÄISCHE PATENTSCHRIFT

(45) Veröffentlichungstag der Patentschrift :
28.09.88

(51) Int. Cl.⁴ : **G 01 F 23/22, F 01 M 11/12**

(21) Anmeldenummer : 84116030.2

(22) Anmeldetag : 21.12.84

(54) Einrichtung zur zeitweisen Messwiederholsperre einer elektrischen Ölstandsmessung einer Maschine, insbesondere eines Verbrennungsmotors.

(30) Priorität : 06.08.84 DE 3428908

(43) Veröffentlichungstag der Anmeldung :
12.02.86 Patentblatt 86/07

(45) Bekanntmachung des Hinweises auf die Patenterteilung : 28.09.88 Patentblatt 88/39

(84) Benannte Vertragsstaaten :
DE FR GB SE

(56) Entgegenhaltungen :
EP-A- 0 057 326
EP-A- 0 074 728
DE-A- 2 364 532
DE-A- 3 304 805

(73) Patentinhaber : VDO Adolf Schindling AG
Gräfstrasse 103
D-6000 Frankfurt/Main (DE)

(72) Erfinder : Steffenhagen, Ulrich
Taunusstrasse 66
D-6237 Liederbach (DE)

(74) Vertreter : Klein, Thomas, Dipl.-Ing. (FH)
Sodener Strasse 9 Postfach 6140
D-6231 Schwalbach a. Ts. (DE)

EP 0 170 730 B1

## Beschreibung

Die Erfindung betrifft eine Einrichtung zur zeitweisen Meßwiederholsperre einer elektrischen Ölstandmessung einer Maschine, insbesondere eines Verbrennungsmotors, nach dem Oberbegriff des Anspruchs 1.

Mit einer derartigen bekannten Einrichtung wird der Ölstand eines Verbrennungsmotors dadurch gemessen, daß beim Betätigen des Zündschlüssels vor dem Anlassen des Verbrennungsmotors die Meßsonde mit einem Konstantstrom beaufschlagt wird und die an ihr abfallende Spannung während verschiedener Zeitpunkte der Einschaltzeit gemessen und ausgewertet wird. Die Meßsonde hat einen relativ hohen Temperaturkoeffizienten, insbesondere bei einer aus Nickel/Eisendraht bestehenden Meßsonde einen positiven Temperaturkoeffizienten, so daß die an der Meßsonde abfallende Spannung mit steigender Temperatur wächst. Zu Beginn der Einschaltzeit des Konstantstroms erfolgt eine erste Messung, und zwar mit einer Anfangsspannung $U_0$, die von der Umgebungstemperatur bzw. der Öltemperatur abhängt. Beim Aufheizen der Meßsonde mit dem Konstantstrom ändert sich die Temperatur der Meßsonde in Abhängigkeit von dem Ölpegel, von dem abhängig mehr oder weniger Wärme abgeleitet wird. So ist die am Ende der Einschaltzeit gemessene Meßspannung, die mit der Anfangsspannung $U_0$ verglichen wird, ein Maß für den Ölpegel. In Abhängigkeit von dem Vergleichsergebnis kann über eine Meldelogik der Zustand Warnung oder Nicht-Warnung einer Meldelampe ausgelöst werden.

Es ist bekannt, daß beim Anlassen des Verbrennungsmotors und bei dessen weiterem Betrieb das Öl aus dem Ölsumpf über Kanäle zu Bohrungen an die zu schmierenden Flächen geführt wird. Dadurch sinkt das Ölniveau in dem Ölsumpf ab, auch wenn ursprünglich eine ausreichende Menge vorhanden war. Nach dem Abschalten der Maschine fließt das Öl allmählich in den Sumpf zurück, so daß nach einer sehr langen Zeit ein Ölpegel erreicht wird, der ein vertretbar genaues Maß für die tatsächlich vorhandene Ölmenge ist.

Demzufolge ist der nach dem Anlassen des Verbrennungsmotors meßbare Ölpegel nicht ohne weiteres ein Maß für die in der Maschine vorhandene Ölmenge, was insbesondere ein dosiertes Nachfüllen des Öls erschwert. Dabei ist zu berücksichtigen, daß nach dem Abschalten des Verbrennungsmotors in der Regel nicht beliebig viel Zeit zur Verfügung steht, um den vollständigen Rücklauf des Öls mit Sicherheit abzuwarten und so unter allen Umständen ein brauchbares Meßergebnis zu erzielen. Hinzu kommt, daß der Ölstand von Verbrennungsmotoren in Kraftfahrzeugen häufig durch den Fahrer und damit nicht immer von technisch interessierten und/oder unterrichteten Personen gemessen wird. Wenn keine besonderen Maßnahmen getroffen werden, ist daher zu befürchten, daß zuviel Öl nachdosiert wird, da die Meldeeinrichtung infolge des in den Kanälen vorhandenen, nicht zurückgeflossenen Öls, irrtümlich eine zu niedrige Ölmenge in der Maschine signalisiert oder aber, daß der Fahrer eine Warnung aus den geschilderten Gründen nicht mehr beachtet und das Nachfüllen auch dann unterläßt, wenn es notwendig wäre. Die nachteiligen Folgen einer in Verbrennungsmotoren zur Schmierung und Kühlung vorgesehenen zu geringen Ölmenge sind bekannt, aber auch diejenigen einer zu großen Ölmenge, von der im besten Fall die überschüssige Menge nutzlos von der Maschine ausgeworfen wird.

Man hat deswegen bei einer bekannten Einrichtung zur elektrischen Ölstandmessung bereits eine Meßwiederholsperre vorgesehen, die den Rückfluß des Öls in den Ölsumpf berücksichtigen soll. Die Meßwiederholsperre bewirkt, daß für eine fest vorgegebene Sperrzeit nach einem schnellen Wiederstart der Maschine zunächst keine erneute Messung stattfinden kann, um zwischenzeitlich einen Ölrückfluß zu ermöglichen.

Es hat sich jedoch herausgestellt, daß diese Meßwiederholsperre nur bei bestimmten Parametern der Umgebungstemperatur und Öltemperatur befriedigend funktionieren kann, da die Viskosität und damit die Rückflußzeit des Öls bekanntlich temperaturabhängig ist. Dies hat zur Folge, daß das Öl bei warmem Wetter und heißer Maschine rasch in den Sumpf zurückfließt, während derselbe Vorgang bei großer Kälte und kurzzeitig betriebener Maschine relativ sehr lange dauert.

Der vorliegenden Erfindung liegt daher die Aufgabe zugrunde, eine Einrichtung zur zeitweisen Meßwiederholsperre einer elektrischen Ölstandmessung einer Maschine dadurch zu verbessern, daß die temperaturabhängige Ölviskosität berücksichtigt wird, und zwar ohne den Herstellaufwand der Einrichtung, die auch in Serienfahrzeugen eingesetzt werden soll, stark zu erhöhen.

Diese Aufgabe ist durch die in dem kennzeichnenden Teil des Anspruchs 1 angegebene Erfindung gelöst worden.

Die Erfindung beruht auf dem Prinzip, daß die Anfangsspannung $U_0$ an der Meßsonde zu Beginn der Einschaltzeit nicht nur dazu verwendet wird, in Relation zu der anschließend am Ende der Einschaltzeit gemessenen Meßspannung ein Maß für den Ölpegel zu bilden, sondern auch in einer zweiten Funktion dazu, den Sperrzeitgeber zur Erzeugung einer variablen Sperrzeit so zu steuern, daß die unterschiedliche, öltemperaturabhängige Rückflußzeit des Öls berücksichtigt wird, bevor die gesamte Einrichtung zu einer erneuten Messung des Ölpegels, etwa nach einem Nachfüllen, freigegeben wird. Diese Einrichtung ist somit deswegen wenig aufwendig, da die Anfangsspannung $U_0$ zur Steuerung des Sperrzeitgebers herangezogen wird und nicht ein elektrisches Signal entsprechend der Öltemperatur gesondert zu bilden ist.

Mit der erfindungsgemäßen Einrichtung kann somit erreicht werden, daß in einem großen Temperaturbereich der Ölpegel nach kurzzeitigem Betrieb einer Maschine nur dann wieder gemessen werden kann, um ein genügend genaues Signal analog der tatsächlich vorhandenen Füllmenge zu bilden, wenn das in den Kanälen vorhandene Öl in definiertem Maß in den Sumpf zurückgeflossen ist.

Als vorteilhaft hat sich eine solche Abhängigkeit der variablen Sperrzeit des Sperrzeitgebers von der Anfangsspannung $U_0$ bzw. der ihr entsprechenden Öltemperatur herausgestellt, daß die variable Sperrzeit bei 20° C Null beträgt und pro 10° K Temperaturabnahme um jeweils 5 Minuten stufenweise zunimmt. Damit ergibt sich eine gute Annäherung der Ölrückflußzeit in Abhängigkeit von der Temperatur bei verschiedenen in Verbrennungsmotoren eingesetzten Ölsorten.

In Anspruch 3 ist eine besonders zweckmäßige Realisierung des variablen Sperrzeitgebers, der als setzbarer Zähler ausgebildet ist und der zu seiner Steuerung benutzten Mittel angegeben. Die Mittel zur Steuerung verarbeiten die Anfangsspannung $U_0$, die insbesondere in einem Ölmeßzählwerk zur Bildung des Signals analog dem Ölpegel zu Beginn der Einschaltzeit der Meßsonde eingespeist wurde. Die Anfangsspannung $U_0$ wird über die Verriegelungsschaltung in den Dekodierer eingespeist, der die oben genannte Kennlinie der variablen Sperrzeit in Abhängigkeit von der Anfangsspannung $U_0$ beinhaltet. Der Dekodierer setzt den Zähler des Sperrzeitgebers, der mit Zeitimpulsen bis zu einem vorgegebenen Endwert durchgezählt wird und während des Zählvorganges die der Anfangsspannung $U_0$ entsprechende Sperrzeit bildet. Das Ausgangssignal sperrt eine erneute Ölpegelmessung über die Steuerlogik der Gesamtablaufsteuerung.

Vorteilhaft kann der variable Sperrzeitgeber, der bei erneutem Einschalten des Schalters zur Inbetriebnahme der Maschine, insbesondere des Zündschalters, initiiert wird, kombiniert werden mit einem zweiten Sperrzeitgeber zur Erzeugung einer relativ kurzen festen Sperrzeit ab Ausschalten des Schalters sowie mit einem dritten Sperrzeitgeber ebenfalls zur Erzeugung einer festen, jedoch relativ langen Sperrzeit ab Ausschalten des Schalters. Die Ausgänge sämtlicher Sperrzeitgeber sind über eine logische Konjunktion zu der Steuerlogik der Gesamtablaufsteuerung geführt, damit gleichartige Ausgangssignale eine Wiederholung der Ölpegelmessung sperren. Der zweite und der dritte Sperrzeitgeber werden nicht temperaturabhängig gesteuert, sondern nur zur Abgabe einer jeweils festen Sperrzeit durch die Meldelogik ausgelöst. In dem Falle, in dem die Meldelogik den Betriebszustand « Warnung » signalisiert, wird insbesondere der Sperrzeitgeber der kurzen Sperrzeit von vorzugsweise 30 Sekunden ausgelöst. Dies ist eine Mindestschutzzeit, die für den Ölrücklauf vorgesehen ist, die es aber andererseits ermöglicht, die Auswirkung eines Nachfüllvorganges auf den Füllzustand bzw. den Ölpegel rasch neu zu messen. Wenn andererseits signalisiert ist, daß der Ölpegel in dem normalen Bereich vor Anlassen der Maschine war, verhindert der dritte Sperrzeitgeber, der eine relativ lange Sperrzeit von vorzugsweise 4 Minuten erzeugt, daß nach Abschalten der Maschine voreilig Öl nachdosiert wird, obwohl nach Rücklauf des Öls in den Sumpf tatsächlich eine genügende Ölmenge vorhanden wäre. Da die vorangehenden Kriterien jedoch nur für bestimmte vorausgesetzte Temperaturverhältnisse näherungsweise zutreffen, ergibt die logische Konjunktion mit der temperaturabhängigen Sperrzeitbildung Sicherheit, daß auch der Einfluß der temperaturabhängigen Ölviskosität berücksichtigt wird.

Anspruch 5 beinhaltet das ODER-Glied, über das sämtliche Sperrzeitgeber in dem gleichen Sinne auf die Steuerlogik eine erneute Messung sperrend einwirken.

Ein bevorzugtes Ausführungsbeispiel der Erfindung wird im folgenden anhand einer Zeichnung mit drei Figuren erläutert. Es zeigen :

Figur 1 ein vereinfachtes Schaltbild zur Realisierung der Meßeinrichtung mit Wiederholsperre,

Figur 2 Strom- und Spannungsabläufe in einer bekannten Meßsonde in Verbindung mit der Einrichtung nach Figur 1, und

Figur 3 die Abhängigkeit der variablen Sperrzeit von der Temperatur.

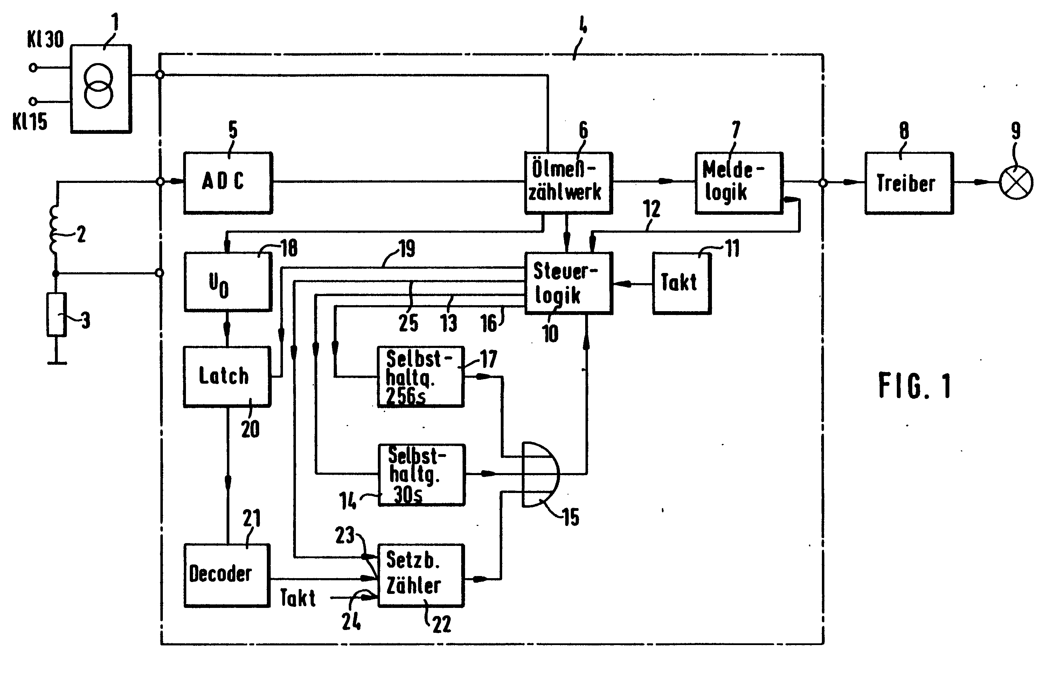

Die Meßeinrichtung mit Meßwiederholsperre nach Figur 1 bezieht sich auf die Ölstandmessung einer Kraftfahrzeugmaschine. Zu dem Betrieb der elektrischen Einrichtung wird die Batteriespannung an der sogenannten Klemme 30 und die Spannung an dem Zündschloß an der sogenannten Klemme 15 benutzt (« 15 » und « 30 » sind also keine Bezugszeichen). Die Batteriespannung speist ein bipolares IC 1, welches u. a. den Konstantstrom einer Meßsonde 2 erzeugt. Dazu wird der Strom an einem Widerstand 3 gemessen.

Die an der Sonde 2 abfallende Spannung wird in einem Logik-IC, welches allgemein mit 4 bezeichnet ist, ausgewertet. Das Logik-IC beinhaltet auch die Meßwiederholsperre.

Im einzelnen enthält das Logik-IC einen Analog-Digital-Umsetzer 5, der die an der Meßsonde 2 abfallende Spannung in eine Digitalzahl umsetzt. Diese wird in einen Ölmeßzähler 6 eingespeist. Ausgangsseitig steht das Ölmeßwerk mit einer Meldelogik 7 in Verbindung, welche die Zustände « Warnung » oder « Nicht-Warnung » unterscheidet und ein entsprechendes Signal an einen Treiber 8 außerhalb des Logik-ICs zur Steuerung einer Meldelampe 9 abgibt.

Der Ölmeßzähler und die Meldelogik 7 werden durch eine Steuerlogik zur Gesamtablaufsteuerung 10 und einem Taktimpulsgeber 11 gesteuert :

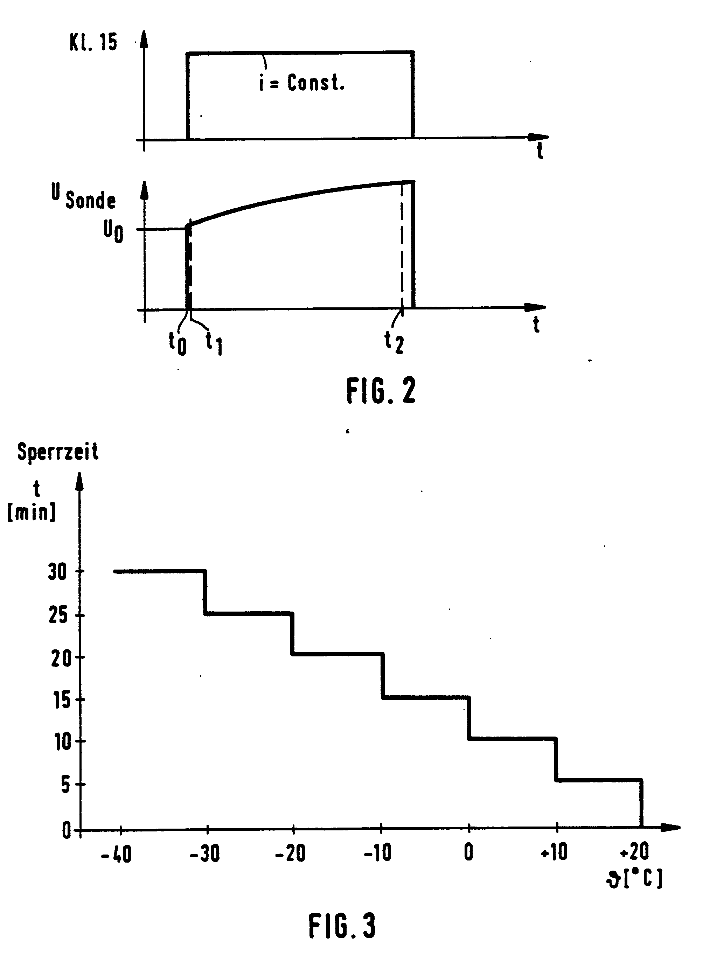

Unter Bezugnahme auf Figur 2 wird nach dem Einschalten des Konstantstroms durch Betätigung des Zündschlüssels an Klemme 15 ab $t_0$ ein Konstantstromimpuls erzeugt. Die kurzzeitig darauf zum Zeitpunkt $t_1$ abfallende Anfangsspannung $U_0$, die bei der ersten Messung ermittelt wird, erfährt eine Umwandlung in eine entsprechende Digitalzahl durch den Analog-Digital-Umsetzer 5 und wird als solche in den Ölmeßzähler 6 eingespeist. Anschließend am Ende der Einschaltzeit erfolgt eine zweite Messung der Spannung an der Meßsonde, jetzt der Meßspannung, zu dem Zeitpunkt $t_2$, die ebenfalls in den Ölmeßzähler als Digitalzahl eingespeist und in dem Ölmeßzähler mit der Digitalzahl der Anfangsspannung $U_0$ verglichen wird. Das Vergleichsergebnis bildet ein Maß für den Ölpegel. Je nach dem Vergleichsergebnis, welches wiederum als Digitalzahl vorliegt, erkennt die Meldelogik den Normalzustand, meldet keine Warnung bzw. « Nicht-Warnung », indem die Meldelampe ausgeschaltet bleibt. Andernfalls, im Fall « Warnung », leuchtet die Meldelampe dauernd auf. Die Meldelogik kann noch eine weitere Funktion zur Feststellung von Kurzschluß oder Unterbrechung der Meßsonde haben, worauf die Meldelampe unterbrochen aufleuchtet.

Der Zustand der Meldelogik wird über eine Leitung 12 in die Steuerlogik eingespeist.

Die Steuerlogik 10 steuert über eine Leitung 13 einen sogenannten zweiten Sperrzeitgeber — der erste Sperrzeitgeber wird weiter unten besprochen —, der zur Abgabe einer relativ kurzen festen Sperrzeit von 30 Sekunden ab dem Ausschalten der Zündung an Klemme 15 eingerichtet ist. Der zweite Sperrzeitgeber hat das Bezugszeichen 14. Er wirkt über ein ODER-Glied 15 auf die Steuerlogik in dem Sinne einer Selbsthaltung ein, so daß keine erneute Messung des Ölpegels durch die Steuerlogik initiiert wird, solange die Sperrzeit von 30 Sekunden nicht abgelaufen ist.

In ähnlicher Weise wird eine erneute Messung des Ölpegels unterbrochen, wenn die Meldelogik über die Leitung 12 den Zustand « Nicht-Warnung » signalisiert. Daraufhin wird über eine Leitung 16 ein dritter Sperrzeitgeber 17 initiiert, so daß dieser während einer Zeit von 256 Sekunden ( = ungefähr 4 Minuten) läuft und ein selbsthaltendes Signal über das ODER-Glied 15 an die Steuerlogik 10 abgibt, welches wiederum eine erneute Messung ab Ausschalten der Zündung für den genannten Zeitraum sperrt.

Für den variablen Sperrzeitgeber wird eine Digitalzahl entsprechend der Anfangsspannung $U_0$ — Block 18 — aus dem Ölmeßzähler 6 ausgelesen und dem Block 18 sowie der Steuerlogik 10 zugeleitet. Ein Impuls entsprechend der Digitalzahl wird über eine Leitung 19 von der Steuerlogik in eine Verriegelungsschaltung 20 (Latch) eingelesen und gespeichert.

Ein Decoder 21 an der Verriegelungsschaltung 20 wandelt die der Anfangsspannung $U_0$ entsprechende Digitalzahl einen Zahlenwert um, der in Verbindung mit einem an ihn angeschlossenen setzbaren Zähler 22, in den die kodierte Digitalzahl an einem Setzeingang 23 eingespeist wird, eine variable Sperrzeit entsprechend der Kennlinie nach Fig. 3 erzeugt.

In Figur 3 ist die in Abhängigkeit von der Öltemperatur im setzbaren Zähler 22 erzeugte Sperrzeit dargestellt, und zwar in Stufen von jeweils 5 Minuten pro 10° K abnehmend, so daß bei einer Umgebungstemperatur von 20° C die variable Sperrzeit Null ist.

Der mit einer kodierten Zahl in Abhängigkeit von der Zahl gemäß der Anfangsspannung $U_0$

gesetzte Zähler wird durch Zeitimpulse an einem Eingang 24 zurückgezählt. Dies geschieht, sobald auf einer Leitung 25 von der Steuerlogik ein Signal bei Einschalten der Zündung abgegeben wird, welches von Klemme 15 ausgelöst wird. Der setzbare Zähler 22 sperrt somit über das ODER-Glied 15 die Steuerlogik 10, die eine erneute Messung für die aus Figur 3 ersichtliche Sperrzeit ab erneutem Betätigen des Zündschlüssels verhindert.

Mit der Einrichtung nach Figur 1 werden somit verschiedene für eine Sperrung der Ölpegelmessung maßgeblichen Parameter so berücksichtigt, daß einerseits möglichst bald nach Nachfüllen einer Ölmenge festgestellt werden kann wie hoch die Füllmenge in der Maschine tatsächlich ist, während andererseits Fehlmessungen durch das in Kanälen der Maschine gespeicherte noch nicht zurückgeflossene Öl vermieden werden.

Bei der beschriebenen Einrichtung wird zur Steuerung des Sperrzeitgebers die Anfangsspannung $U_0$ der Ölmeßsonde herangezogen.

Es versteht sich von selbst, daß dazu auch ein anderer, genauerer Geber herangezogen werden kann, wenn die Ölmeßsonde als Temperatursensor nicht genau genug ist.

Weiterhin ist besonders darauf hinzuweisen, daß die Zeit der variablen Meßwiederholsperre auch während der Fahrt laufen kann.

**Patentansprüche**

1. Einrichtung zur zeitweisen Meßwiederholsperre einer elektrischen Ölstandmessung einer Maschine, insbesondere eines Verbrennungsmotors, mit einer Meßsonde (2), die während einer von einem Schalter zum Inbetriebnehmen der Maschine, insbesondere einem Zündschalter, ausgelösten Einschalzeit mit einem Konstantstrom beheizt wird, mit Mitteln (6) zum Vergleich einer Anfangsspannung $U_0$ an der Meßsonde (2) zu Beginn der Einschaltzeit mit einer Meßspannung am Ende der Einschaltzeit einer Meßperiode, mit einer in Abhängikeit von dem Vergleichsergebnis steuerbaren Meldelogik (7) zur Meldung des Ölstands sowie mit einem ersten Sperrzeitgeber (21 bis 24), der in Verbindung mit einer Steuerlogik (10) eine wiederholte Messung während wenigstens einer vorgegebenen Zeitdauer nach Abschalten oder erneutem Einschalten der Maschine sperrt, dadurch gekennzeichnet, daß der erste Sperrzeitgeber (21 bis 24) zur Erzeugung einer variablen Sperrzeit in Abhängigkeit von der Anfangsspannung $U_0$ der vorangehenden Messung so steuerbar ist, daß die Sperrzeit mit steigender Anfangsspannung $U_0$ abnimmt.

2. Einrichtung nach Anspruch 1, dadurch gekennzeichnet, daß die variable Sperrzeit bei 20° C Null beträgt und pro 10° K Temperaturabnahme um 5 Minuten stufenweise zunehmend bemessen ist.

3. Einrichtung nach Anspruch 1 oder 2, dadurch gekennzeichnet, daß der Wert der Anfangsspannung $U_0$ über einen Zwischenspeicher (18) und eine Verriegelungsschaltung (20) in einen Decodierer (21) einspeisbar ist, der den Wert der Anfangsspannung $U_0$ entsprechend einer Kennlinie der variablen Sperrzeit bewertet und zur Erzeugung eines Sperrsignals einen Zähler (22) setzt, der von der Steuerlogik (10) gesteuert bis zu einem vorgegebenen Zählwert zählt.

4. Einrichtung nach einem der Ansprüche 1 bis 3, dadurch gekennzeichnet, daß außer dem ersten Sperrzeitgeber (21 bis 24) zur Erzeugung einer variablen Sperrzeit ab erneutem Einschalten des Schalters zum Inbetriebnehmen der Maschine ein zweiter Sperrzeitgeber (14) zur Erzeugung einer relativ kurzen festen Sperrzeit ab Ausschalten des Schalters und ein dritter Sperrzeitgeber (17) zur Erzeugung einer relativ langen festen Sperrzeit ab Ausschalten des Schalters vorgesehen sind und daß der zweite oder der dritte Sperrzeitgeber wahlweise durch die Meldelogik (7) aktivierbar sind.

5. Einrichtung nach Anspruch 4, dadurch gekennzeichnet, daß die Ausgänge aller Sperrzeitgeber über ein ODER-Glied (15) zu der Steuerlogik (10) geführt sind, so daß eine wiederholte Messung gesperrt wird, solange ein Sperrzeitsignal an einem der Eingänge ansteht.

## Claims

1. Device for temporarily blocking the measuring sequence of the electric oil-level measurement of an engine, particularly of an internal combustion engine, having a measuring probe (2) which is heated by a constant current for an on-time triggered by a switch for starting up the engine, particularly an ignition switch ; having means (6) for comparing an initial voltage $U_0$, at the measuring probe (2) at the start of the on-time with a measurement voltage at the end of the on-time of a measurement period ; having a signalling logic (7) which can be controlled in response to the comparison result, for signalling the oil-level ; and having a first blocking period transducer (21 to 24), which in conjunction with a control logic (10) blocks repeated measurement for at least a preset duration after the engine has been switched off or switched back on, characterised in that for generating a variable blocking period in response to the initial voltage $U_0$ of the preceding measurement, the first blocking period transducer (21 to 24) is adapted to be so controlled that the blocking period decreases as the initial voltage $U_0$ increases.

2. Device according to Claim 1, characterised in that the variable blocking period is zero at 20° C and is increased incrementally by 5 minutes per 10° K temperature drop.

3. Device according to Claim 1 or 2, characterised in that the value of the initial voltage $U_0$ can be fed via a latch (18) and an interlocking circuit (20) into a decoder (21) which rates the value of the initial voltage $U_0$ in accordance with a variable blocking period characteristic and to generate a blocking signal sets a counter (22) which controlled by the control logic (10) counts to a preset value.

4. Device according to one of Claims 1 to 3, characterised in that aside from the first blocking period transducer (21 to 24) for generating a variable blocking period from when the switch is switched back on until the engine is started up, there are provided a second blocking period transducer (14) for generating a relatively short fixed blocking period from when the switch is switched off, and a third blocking period transducer (17) for generating a relatively long fixed blocking period from when the switch is switched off, and that the second or the third blocking period transducers can be activated alternately by the signalling logic (7).

5. Device according to Claim 4, characterised in that the outputs of all the blocking period transducers are sent via an OR element (15) to the control logic (10), thereby blocking repeated measurement for as long as a blocking period signal appears at one of the inputs.

## Revendications

1. Dispositif de blocage destiné à empêcher temporairement de répéter la mesure, par voie électrique, du niveau de l'huile dans une machine, notamment un moteur à combustion interne, ce dispositif comportant une tête (2) de mesure, qui est chauffée par un courant constant pendant une période de branchement déclenchée par un interrupteur de mise en service de la machine, notamment une clé de contact, un élément (6) destiné à comparer une tension initiale ($U_0$) ; relevée sur cette tête (2) au début de la période de branchement, à une tension de mesure à la fin de la durée de branchement de la période de mesure, un circuit logique (7) de signalisation activable en fonction du résultat de la comparaison de façon à indiquer le niveau de remplissage, ainsi qu'un premier générateur (21 à 24) de durée de blocage qui, en liaison avec un circuit logique (10) de commande, empêche de répéter la mesure pendant au moins une durée prédéterminée après l'arrêt ou la remise en marche de la machine, dispositif caractérisé en ce que, pour obtenir une durée de blocage variable en fonction de la tension initiale ($U_0$) de la mesure précédente, le premier générateur (21-24) de durée de blocage peut être commandé de façon que cette durée diminue quand cette tension initiale ($U_0$) augmente.

2. Dispositif selon la revendication 1, caractérisé en ce que la durée variable de blocage est nulle à 20° C et augmente par paliers de 5 minutes pour chaque diminution de 10° K de la température.

3. Dispositif selon la revendication 1 ou 2, caractérisé en ce que la valeur de la tension initiale ($U_0$) peut être injectée par l'entremise d'une mémoire intermédiaire (18) et d'un circuit (20) de blocage dans un décodeur (21) qui quantifie cette valeur conformément à une courbe

caractéristique de la durée variable de blocage et active un compteur (22), lequel, sous la commande du circuit logique (10) de commande, compte jusqu'à une valeur numérique prédéterminée de manière à créer un signal de blocage.

4. Dispositif selon l'une des revendications 1 à 3, caractérisé en ce qu'il comporte, outre le premier générateur (21-24) destiné à engendrer une durée de blocage variable à partir d'une nouvelle fermeture de l'interrupteur de mise en marche de la machine, un second générateur (14) destiné à engendrer une durée fixe de blocage relativement courte à partir de l'ouverture de cet interrupteur et un troisième générateur (17) destiné à engendrer une durée fixe de blocage relativement longue à partir de l'ouverture dudit interrupteur ; et en ce que ces second et troisième générateurs peuvent être activés au choix par l'intermédiaire du circuit logique (7) de signalisation.

5. Dispositif selon la revendication 4, caractérisé en ce que les sorties de tous les générateurs de durées de blocage sont reliées, par l'intermédiaire d'un circuit OU (15), au circuit logique (10) de commande, de façon à empêcher une nouvelle mesure tant qu'il existe un signal, indiquant une durée de blocage, sur l'une des entrées.

**FIG. 1**

**FIG. 2**

**FIG. 3**